# EUROPEAN PATENT SPECIFICATION

(11) **EP 2 979 900 B1**
(45) Date of publication and mention of the grant of the patent: **16.08.2017**
(21) Application number: 14774565.7
(22) Date of filing: 28.03.2014
(51) Int. Cl.: B60C 9/02, B60C 9/28, B60C 9/20

(54) **HEAVY LOAD PNEUMATIC TIRE**
SCHWERLASTLUFTREIFEN
PNEUMATIQUE POUR CHARGE LOURDE

(30) Priority: 28.03.2013 JP 2013069008
(43) Date of publication of application: 03.02.2016
(73) Proprietor: Bridgestone Corporation, Tokyo 104-8340 (JP)
(72) Inventor: ONO, Takashi, Kodaira-shi Tokyo 187-8531 (JP)
(74) Representative: Oxley, Robin John George
(86) International application number: PCT/JP2014/001855
(87) International publication number: WO 2014/156198

(56) References cited:
- JP-A- H1 035 219
- JP-A- H06 156 011
- JP-A- 2009 073 337
- JP-A- 2010 126 123
- JP-B1- 4 918 948
- US-A1- 2007 151 643
- US-A1- 2009 277 552

## Description

### TECHNICAL FIELD

This disclosure relates to a heavy load pneumatic tire, and in particular to a heavy load pneumatic tire that improves uneven wear resistance without a decrease in durability.

### BACKGROUND

In heavy load pneumatic tires, used for example in heavy load vehicles such as buses and trucks, uneven wear tends to occur on the shoulder portion of the tire tread. A variety of techniques have been proposed to reduce the uneven wear occurring in the shoulder portion and improve the uneven wear resistance (for example, see JP 2009-18629 A (PTL 1)).

PTL 2, considered to be the closest prior art, discloses a tire wherein the tread portion has a ground contacting face having circumferential lengths at specific axial positions that satisfy specific conditions for improving shoulder wear.

PTL 3 discloses a tire wherein specific conditions are satisfied for a distance from the X-axis to a peak of the carcass layer on the center crown, a distance from the X-axis to the maximum width position and a distance from the X-axis to an inflection point of the carcass layer.

### CITATION LIST

### Patent Literature

PTL 1: JP 2009-18629 A
PTL 2: US 2007/0151643 A1
PTL 3: US 2009/0277552 A1

### SUMMARY

### (Technical Problem)

In a heavy load pneumatic tire based on such a conventional technique, however, the uneven wear occurring in the shoulder portion of the tread may not be sufficiently reduced. Also, improving the uneven wear resistance may negatively impact another property, for example by reducing durability due to separation at the belt edge, thus making it difficult to achieve both uneven wear resistance and other properties.

It could therefore be helpful to provide a heavy load pneumatic tire that improves uneven wear resistance without a decrease in durability.

### (Solution to Problem)

An aspect of the application provides a heavy load pneumatic tire, 14° < θ₁ < 20° and 15° < θ₂ - θ₁ < 20°, where θ₁ is the angle of inclination with respect to the tire equatorial plane of the belt cords in the belt plies forming the intersecting belt layer, and θ₂ is the angle of inclination, with respect to the tire equatorial plane of a belt cord in the belt ply forming the angled belt layer,
in a cross-section in a tire width direction, the carcass has a shape, from an outermost position of the carcass in the tire radial direction to an outermost position of the carcass in the tire width direction, formed by connecting two arcs with a center of curvature towards an inside of the tire and with different radii of curvature, and R₁ > R₂, where R₁ is a radius of curvature of an inner arc positioned inward in the tire width direction and R₂ is a radius of curvature of an outer arc positioned outward in the tire width direction, and
the distance, measured along the tire width direction from the tire equatorial plane, to the intersection of the inner arc and the outer arc is from 80% to 105% of the distance, measured along the tire width direction from the tire equatorial plane, of the length of the range of overlap between the belt plies in the intersecting belt layer.

It is thus possible to improve uneven wear resistance while preventing separation at the outer edges of the belt in the tire width direction and preventing a reduction in durability.

The "range of overlap between the belt plies in the intersecting belt layer" (overlapping range) refers to the length of the range in which the belt plies in the intersecting belt layer overlap when viewed in the tire radial direction.

According to another aspect, in the heavy load pneumatic tire, the radii of curvature R₁ and R₂ are preferably set such that R₁/R₂ ≥ 9.5. With this structure, the amount of radial growth in the tire radial direction near the shoulder portion of the carcass can be further reduced, thereby further improving tire durability.

In this disclosure, the angles and dimensions, such as the angle of the belt cords in the belt with respect to the tire equatorial plane, the distance of the overlapping range from the tire equatorial plane, and the like, refer to the angles and dimensions for a tire mounted on an applicable rim, with specified air pressure and no load applied, unless otherwise specified. An "applicable rim" refers to a standard rim ("approved rim" or "recommended rim") of applicable size specified in accordance with valid industrial standards for the region in which the tire is produced and used, such as the "JATMA (Japan Automobile Tyre Manufacturers Association) Year Book" in Japan, the "ETRTO (European Tyre and Rim Technical Organisation) Standard Manual" in Europe, and the "TRA (Tire and Rim Association, Inc.) Year Book" in the United States of America. The "tire mounted on an applicable rim, with air pressure) corresponding to the maximum load capability for a single wheel of the applicable size/ply rating listed by JATMA or the like. Note that the air referred to here can be substituted with, for example, an inert gas such as nitrogen gas.

### (Advantageous Effect)

It is thus possible to provide a heavy load pneumatic tire that improves uneven wear resistance without a decrease in durability.

### BRIEF DESCRIPTION OF THE DRAWINGS

In the accompanying drawings:
FIG. 1 is an enlarged cross-sectional diagram in the tire width direction illustrating the area near the tread portion of a heavy load pneumatic tire according to an embodiment; and
FIG. 2 is a development view of the carcass and the belt in the tread portion of the heavy load pneumatic tire in FIG. 1.

### DETAILED DESCRIPTION

Embodiments will be described below with reference to the drawings.

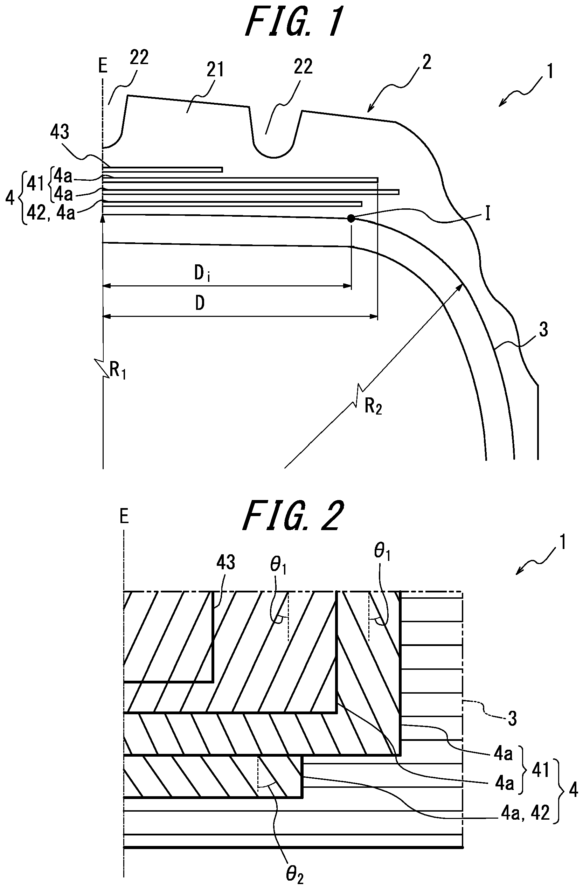

FIG. 1 is an enlarged cross-sectional diagram in the tire width direction illustrating (half of) the area near the tread portion of the heavy load pneumatic tire (also referred to below as a tire) as mounted on an applicable rim, with specified air pressure and no load applied.

The heavy load pneumatic tire 1 illustrated in FIG. 1 is a tire to be mounted on a bus or truck. While portions are omitted from the drawings, the heavy load pneumatic tire 1 includes a tread portion 2, a pair of sidewalls continuous on either side of the tread portion 2, and non-illustrated bead portions continuous with the sidewalls. Furthermore, the tread portion 2 extends between bead cores embedded in the bead portions, and the heavy load pneumatic tire 1 includes a carcass 3 extending toroidally across the sidewalls and the bead portions. The carcass 3 illustrated in FIG. 1 is formed from one ply, yet in the tire 1, the number of plies in the carcass 3 may be changed to two or more as necessary.

In the tread portion 2, tread rubber 21 is provided outward from the carcass 3 in the tire radial direction, and circumferential grooves 22 extending in the tire circumferential direction are formed on the surface of the tread rubber 21. The figures show circumferential grooves 22, yet other grooves such as width direction grooves extending in the tire width direction may instead be formed, as may any tread pattern such as a ribbed pattern, block pattern, or the like.

Furthermore, in FIG. 1, a belt 4 is provided between the carcass 3 and the tread rubber 21 in the tread portion 2. The belt 4 is constituted by stacking a plurality of belt plies 4a each formed by coating one or more belt cords, such as steel cords, with rubber.

The belt 4 includes an intersecting belt layer 41 formed by layering a pair of belt plies 4a, belt cords in the belt plies 4a intersecting each other with the tire equatorial plane E therebetween, and an angled belt layer 42 formed by at least one belt ply 4a. In the figures, the angled belt layer 42 is formed by one belt ply 4a. The belt cords of the belt plies 4a forming the intersecting belt layer 41 are inclined at an angle θ₁ with respect to the tire equatorial plane E and are arranged to be substantially symmetrical. As long as the belt cords intersect each other with the tire equatorial plane E therebetween, they need not be symmetrical (θ₁ may differ). The belt cords of the belt ply 4a forming the angled belt layer 42 are inclined at an angle θ₂ with respect to the tire equatorial plane E.

As illustrated in FIGS. 1 and 2, the belt layers are layered from the inside to the outside in the tire radial direction in the order of the angled belt layer 42, formed by one belt ply 4a, and the intersecting belt layer 41, formed by a pair of belt plies 4a, yet the order of layering may be changed freely.

In a conventional heavy load pneumatic tire, when the tire is rolling, the tension of the belt provided in the tread portion is typically largest in the central portion of the tread portion and decreases towards the shoulder portion of the tread portion outward in the tire width direction. Therefore, the ground contact pressure on the road surface reduces in the shoulder portion, and when the tire rolls and kicks off the road surface, the shoulder portion may slip on the road surface, resulting in uneven wear in the shoulder portion.

Therefore, in the heavy load pneumatic tire 1, the relationships 10° < θ₁ < 25° and 15° < θ₂ - θ₁ < 25° hold, where θ₁ is the angle, with respect to the tire equatorial plane E, of the belt cords in the belt plies 4a forming the intersecting belt layer 41, and θ₂ is the angle, with respect to the tire equatorial plane E, of the belt cords in the belt ply 4a forming the angled belt layer 42.

By thus setting the angle θ₁ of the intersecting belt layer 41 to be within the above range, when the tire is rolling, the tension of the belt 4 at the shoulder portion increases relatively as compared to the tension of the belt 4 at the central portion. Therefore, when the tire is rolling, the tension of the belt 4 at the shoulder portion can be improved. Setting the angle θ₁ of the intersecting belt layer 41 to be within the above range, however, causes the tension of the belt 4 at the central portion to be insufficient. To address this point, the angle θ₂ of the angled belt layer 42 is set to be within the above range, which is greater than that of the intersecting belt layer 41, so that when the tire is rolling, the angled belt layer 42 can compensate for the tension of the belt 4 at the central portion without reducing the tension of the belt 4 at the shoulder portion. Therefore, in the belt width direction, the tension of the belt 4 increases overall from the central portion to the shoulder portion, or the tension of the belt 4 becomes uniform in the tire width direction. As a result, it is possible to guarantee the ground contact pressure on the road surface in the central portion while increasing the ground contact pressure on the road surface in the shoulder portion, thereby improving uneven wear resistance.

If the angle θ₁ of the intersecting belt layer 41 is set to be 10° or less, the tension of the belt 4 at the central portion when the tire is rolling is greatly reduced, which may cause uneven wear at the central portion. Conversely, even if the angle θ₁ of the intersecting belt layer 41 is set to be 25° or more, the tension of the belt 4 at the shoulder portion when the tire is rolling does not increase enough to contribute further to improving uneven wear resistance.

If the relationship between the angles θ₁ and θ₂ is such that θ₂ - θ₁ ≤ 15°, then the tension of the belt 4 at the shoulder portion when the tire is rolling decreases dramatically, whereas if 25° ≤ θ₂ - θ₁, then although the tension of the belt 4 at the central portion increases, the tension of the belt 4 at the shoulder portion, which was increased by setting the angle θ₁ of the intersecting belt layer 41 to be within the above range, decreases.

Furthermore, from the perspective of making an increase in uneven wear resistance compatible with the below-described tire durability, the relationships 14° < θ₁ < 20° and 15° < θ₂ - θ₁ < 20° are more preferable.

As illustrated in FIG. 1, in a cross-section of the heavy load pneumatic tire 1 in the tire width direction, the carcass 3 has a shape, from the outermost position of the carcass 3 in the tire radial direction to the outermost position of the carcass 3 in the tire width direction, formed by connecting two arcs with a center of curvature towards the inside of the tire and with different radii of curvature. Of these two arcs, the radius of curvature of the inner arc, which is the arc located inward in the tire width direction, is defined as R₁, and the radius of curvature of the outer arc, which is the arc located outward in the tire width direction, is defined as R₂.

While only half of the tire is illustrated in FIG. 1, in a cross-section of the tire of the present embodiment in the tire width direction, the shape of the carcass 3 from the outermost position at one side in the tire width direction to the outermost position at the other side in the tire width direction, passing through the outermost position in the tire radial direction, is formed by connecting three arcs: the inner arc with radius of curvature R₁, which includes the outermost position of the carcass 3 in the tire radial direction, and outer arcs with radius of curvature R₂ at either side outward in the tire width direction. As long as the below-described relationship between the radii of curvature R₁ and R₂ is satisfied, the radii of curvature of the outer arcs outward in the tire width direction may differ from each other.

As described above, the uneven wear resistance can be improved by setting the angle θ₁ of the intersecting belt layer 41 and the angle θ₂ of the angled belt layer 42 to be within prescribed ranges. On the other hand, upon applying internal pressure to the tire 1, separation occurs more easily due to strain on the tread rubber 21 caused by the increased tension of the belt 4 at the shoulder portion near the outer edge of the belt 4 in the tire width direction, specifically near the outer edge of the intersecting belt layer 41 in the tire width direction. Hence, the durability of the tire 1 tends to worsen.

To address this issue, in the heavy load pneumatic tire 1, the radii of curvature R₁ and R₂ of the inner arc and the outer arc are set so that R₁ > R₂, and the distance Di, measured along the tire width direction from the tire equatorial plane E, to the intersection I of the arcs is 80% or more of the distance D, measured along the tire width direction from the tire equatorial plane E, of the range of overlap between the belt plies 4a in the intersecting belt layer 41.

Setting the radius of curvature R₁ to be larger than R₂ and bringing the intersection I of the arcs closer to the distance D allows for a reduction in the radial growth, outward in the tire radial direction, of the outer edge of the belt 4 in the tire width direction when internal pressure is applied to the tire. Setting the distance of the intersection I to be 80% or more of the distance D reduces the amount of radial growth at the outer edge of the belt 4 in the tire width direction and sufficiently suppresses strain within the tread rubber 21, allowing for prevention of separation at the outer edges of the belt 4 in the tire width direction and for prevention of a reduction in durability.

In the heavy load pneumatic tire 1, the radii of curvature R₁ and R₂ are preferably such that R₁/R₂ ≥ 9.5. With this structure, when internal pressure is applied to the tire, the amount of radial growth outward in the tire radial direction at the outer edge of the belt 4 in the tire width direction is further reduced. Therefore, strain on the tread rubber 21 can be better suppressed, thus more effectively allowing for prevention of separation at the outer edges of the belt 4 in the tire width direction and prevention of a reduction in durability.

The distance Di is in the range from 80% to 105% of the distance D, since setting the distance Di to be 80% or more of the distance D can prevent a reduction in durability, yet from a manufacturing perspective, an upper limit of 105% of the distance D is necessary (i.e. 80% ≤ Di/D × 100 ≤ 105%).

In FIGS. 1 and 2, the intersecting belt layer 41 is formed so that the width of the belt ply 4a inward in the tire radial direction is greater than the width of the belt ply 4a outward in the tire radial direction, yet the relationship between the magnitudes of these widths may be reversed, or the widths may be the same. The outer edges of the belt plies 4a in the tire width direction, however, preferably do not lie at the same position in the tire width direction. If the outer edges of the belt plies 4a in the tire width direction lie at the same position in the tire width direction, separation occurs more easily near these outer edges.

As illustrated in FIG. 1, an auxiliary belt layer 43 that is narrower than the belt 4 may be provided in the tread portion 2 outward from the belt 4 in the tire radial direction. By doing so, even if the tire 1 runs over a rock or the like located on the road surface, damage to the tread portion 2 can be prevented, and the durability of the tire 1 can be improved. In the figures, the auxiliary belt layer 43 is formed from one belt ply 4a, the width thereof is approximately half the width of the angled belt layer 42, and the auxiliary belt cords have the same angle as the angle θ₁ of the intersecting belt layer 41. The number of belt plies 4a, the width, and the angle of the auxiliary belt layer 43 may, however, be modified freely.

The aspect ratio of the heavy load pneumatic tire 1 is preferably from 60% to 100%. In a tire with an aspect ratio of less than 60%, the tension acting on the belt when the tire is rolling tends to increase as compared to a tire with an aspect ratio of 60% to 100%. Such increased tension may place a burden on the angled belt layer. Therefore, the structure in this disclosure is preferably applied to a tire with an aspect ratio of 60% to 100%.

When the carcass is formed from two or more plies, the shape of the carcass in a cross-section in the tire width direction refers to the neutral axis line of tension-compression in the carcass when the tire 1 is mounted on an applicable rim, with specified air pressure and no load applied.

While an embodiment has been described as an example with reference to the drawings, the heavy load pneumatic tire of the present disclosure is not limited to the above embodiment, and modifications may be made freely to the above embodiment.

### EXAMPLES

The following provides further details by way of examples, yet the following examples are in no way limiting.

The tire of Example 1 has a size of 295/75R22.5 and is structured so that the radii of curvature R₁ and R₂ of two arcs forming the shape of the carcass satisfy the relationship R₁ > R₂, as illustrated in FIGS. 1 and 2. The dimensions of the tire conform to the specifications listed in Table 1. In the tire of Example 1, the width of the tread surface is 117 mm, the width of the intersecting belt layer is 98 mm, the angled belt layer is formed from one belt ply, the width of the angled belt layer is 98 mm, and the aspect ratio is 75%. Furthermore, the tire of Example 1 includes an auxiliary belt layer, formed from one belt ply, with a width of 34 mm and an angle of 72°.

The tires of Examples 2 to 6 and of Comparative Examples 1 to 8 have the same structure as that of the tire in Example 1, except for the structural changes indicated by the specifications in Table 1.

The below-described uneven wear resistance test and durability test were performed on each of the above sample tires. Table 1 shows the test results.

For the uneven wear resistance test, each sample tire was mounted on an 8.25 × 22.5 sized rim, and an internal pressure of 690 kPa was applied. The sample tire was then placed in an indoor drum test machine, a load of 27 kN was applied, and the tire was run a distance of 10000 km at a speed of 80 km/h. The amount of uneven wear at the shoulder portion of the tread portion in the sample tire after test running was then measured. Table 1 lists the amount of uneven wear, expressed as an index with the value for the tire of Comparative Example 1 as 100, calculated by taking the inverse of the value yielded by multiplying the uneven wear depth (mm) from the tread surface edge by the length of the uneven wear in the tire width direction and dividing by two. A larger index indicates better uneven wear resistance.

For the durability test, each sample tire was mounted on an 8.25 × 22.5 sized rim, and an internal pressure of 690 kPa was applied. The sample tire was then placed in an indoor drum test machine, a load of 30 kN was applied, and the tire was run a distance of 10000 km at a speed of 60 km/h. For each sample tire after test running, the separation length at the edge of the intersecting belt layer in the tire width direction was then measured. The inverse of the length of each test tire was then taken and expressed as an index, with the separation length of the tire of Comparative Example 1 as 100. Table 1 lists the resulting separation length. A larger index indicates shorter separation length and better durability.

**[Table 1]**

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Ex. 1 | Ex. 2 | Ex. 3 | Ex. 4 | Ex. 5 | Ex. 6 |
|---|---|---|---|---|---|---|---|---|---|---|---|---|---|---|
| Angle θ₁ of intersecting belt layer (°) | 16 | 16 | 20 | 20 | 16 | 16 | 8 | 26 | 16 | 16 | 16 | 16 | 16 | 16 |
| Angle θ₂ of angled belt layer (°) | 50 | 26 | 50 | 30 | 36 | 36 | 28 | 46 | 36 | 32 | 40 | 36 | 32 | 40 |
| Difference between angles (θ₂-θ₁) | 34 | 10 | 30 | 10 | 20 | 20 | 20 | 20 | 20 | 16 | 24 | 20 | 16 | 24 |
| Overlapping width of intersecting belt layer (mm) | 95 | 95 | 95 | 95 | 95 | 95 | 95 | 95 | 95 | 95 | 95 | 95 | 95 | 95 |
| Intersection (mm) | 80 | 80 | 80 | 80 | 75 | 70 | 80 | 80 | 80 | 80 | 80 | 78 | 78 | 78 |
| Intersection/overlapping width (%) | 84 | 84 | 84 | 84 | 79 | 74 | 84 | 84 | 84 | 84 | 84 | 82 | 82 | 82 |
| R₁/R₂ | 9.6 | 9.6 | 9.6 | 9.6 | 9.6 | 9.6 | 9.6 | 9.6 | 9.6 | 9.6 | 9.6 | 9.6 | 9.6 | 9.6 |
| Uneven wear resistance test | 100 | 85 | 80 | 80 | 120 | 120 | 95 | 90 | 120 | 115 | 110 | 120 | 115 | 110 |
| Separation property | 100 | 100 | 95 | 92 | 95 | 90 | 95 | 80 | 105 | 105 | 105 | 102 | 101 | 103 |

Table 1 shows that as compared to the tires of Comparative Examples 1 to 4 and 7 to 8, uneven wear resistance was improved for the tires of Examples 1 to 6 and Comparative Examples 5 to 6, since the relationships 10° < θ₁ < 25° and 15° < θ₂ - θ₁ < 25° were satisfied. Table 1 also shows that as compared to the tires of Comparative Examples 5 to 6, durability was improved for the tires of Examples 1 to 6, since the intersection distance Di / the distance D of the overlapping region was 80% or more.

### INDUSTRIAL APPLICABILITY

It is thus possible to provide a heavy load pneumatic tire that improves uneven wear resistance without a decrease in durability.

### REFERENCE SIGNS LIST

1 Heavy load pneumatic tire
2 Tread portion
21 Tread rubber
22 Circumferential groove
3 Carcass
4 Belt
4a Belt ply
41 Intersecting belt layer
42 Angled belt layer
43 Auxiliary belt layer
D Distance (of the range of overlap between the belt plies in the intersecting belt layer, measured along the tire width direction from the tire equatorial plane)
Di Distance (to the intersection, measured along the tire width direction from the tire equatorial plane)
E Tire equatorial plane
I Intersection (between inner arc and outer arc)
R₁ Radius of curvature (of inner arc)
R₂ Radius of curvature (of outer arc)
θ₁ Angle (of belt cords in intersecting belt layer with respect to the tire equatorial plane)
θ₂ Angle (of belt cords in angled belt layer with respect to the tire equatorial plane)

## Claims

1. A heavy load pneumatic tire (1) comprising:
a carcass (3); and
a belt (4), in a tread portion (2), positioned outward from the carcass (3) in a tire radial direction, wherein
the belt (4) includes an intersecting belt layer (41) formed by layering a pair of belt plies (4a), belt cords in the belt plies (4a) intersecting each other with a tire equatorial plane (E) therebetween, and an angled belt layer (42) formed by at least one belt ply (4a),
14° < θ₁ < 20° and 15° < θ₂ - θ₁ < 20°, where θ₁ is an angle, with respect to the tire equatorial plane (E), of the belt cords in the belt plies (4a) forming the intersecting belt layer (41), and θ₂ is an angle, with respect to the tire equatorial plane (E), of a belt cord in the belt ply (4a) forming the angled belt layer (42),
in a cross-section in a tire width direction, the carcass (3) has a shape, from an outermost position of the carcass (3) in the tire radial direction to an outermost position of the carcass (3) in the tire width direction, formed by connecting two arcs with a center of curvature towards an inside of the tire (1) and with different radii of curvature,
R₁ > R₂, where R₁ is a radius of curvature of an inner arc positioned inward in the tire width direction and R₂ is a radius of curvature of an outer arc positioned outward in the tire width direction, and
a distance (Dᵢ), measured along the tire width direction from the tire equatorial plane (E), to an intersection (I) of the inner arc and the outer arc is from 80% to 105% of a distance (D), measured along the tire width direction from the tire equatorial plane (E), of a range of overlap between the belt plies (4a) in the intersecting belt layer (41).

2. The heavy load pneumatic tire of claim 1, wherein R₁/R₂ ≥ 9.5.

## Patentansprüche

1. Schwerlastluftreifen, Folgendes beinhaltend:
eine Karkasse (3); und
einen Gürtel (4), in einem Laufflächenabschnitt (2), welcher von der Karkasse (3) auswärts in einer Reifenradialrichtung positioniert ist, wobei
der Gürtel (4) eine kreuzende Gürtellage (41) beinhaltet, welche durch Schichten eines Paars von Gürtellagen (4a) gebildet wird, wobei Gürtelkords in den Gürtellagen (4a) einander mit einer Reifenäquatorebene (E) dazwischen kreuzen, und eine winklig angeordnete Gürtelschicht (42) durch mindestens eine Gürtellage (4a) gebildet wird,
14° < θ₁ < 20° und 15° < θ₂ - θ₁ < 20°, wobei θ₁ ein Winkel in Bezug auf die Reifenäquatorebene (E) der Gürtelkords in den Gürtellagen (4a) ist, welche die kreuzende Gürtelschicht (41) bilden, und θ₂ ein Winkel in Bezug auf die Reifenäquatorebene eines Gürtelkords in der Gürtellage (4a) ist, welche die winklig angeordnete Gürtelschicht (42) bildet,
in einem Querschnitt in einer Reifenbreitenrichtung die Karkasse (3) eine Form besitzt, von einer äußersten Position der Karkasse (3) in der Reifenradialrichtung zu einer äußersten Position der Karkasse (3) in der Reifenbreitenrichtung, welche durch Verbindung zweier Bögen mit einem Mittelpunkt der Krümmung in Richtung eines Inneren des Reifens (1) und mit unterschiedlichen Krümmungsradien gebildet wird,
R₁> R₂, wobei R₁ ein Krümmungsradius eines inneren Bogens ist, der in Reifenbreitenrichtung einwärts positioniert ist, und R₂ ein Krümmungsradius eines äußeren Bogens ist, der in Reifenbreitenrichtung auswärts positioniert ist, und
ein Abstand (Dᵢ), gemessen entlang der Reifenbreitenrichtung von der Reifenäquatorebene (E), bis zu einem Schnittpunkt (I) des inneren Bogens und des äußeren Bogens zwischen 80 % und 105 % eines Abstands (D) eines Bereichs der Überlappung zwischen den Gürtellagen (4a) in der kreuzenden Gürtelschicht (41) beträgt, welcher entlang der Reifenbreitenrichtung von der Reifenäquatorebene (E) gemessen wird.

2. Schwerlastluftreifen nach Anspruch 1, bei welchem R₁/R₂ ≥ 9,5 beträgt.

## Revendications

1. Pneu pour charges lourdes (1) comprenant :
une carcasse (3), et
une ceinture, dans une partie de bande de roulement (2), positionnée à l'extérieur par rapport à la carcasse (3) dans la direction radiale du pneu, dans lequel :
la ceinture (4) comprend une couche de ceinture croisée (41) formée en superposant une paire de nappes de ceinture (4a), des fils câblés de ceinture dans les nappes de ceinture (4a) se croisant l'un par rapport à l'autre, avec un plan équatorial (E) du pneu entre les deux, et une couche de ceinture inclinée (42) formée par au moins une nappe de ceinture (4a),
14° < θ₁ < 20° et 15° < θ₂ - θ₁ < 20°, où θ₁ est un angle, par rapport au plan équatorial du pneu (E), des fils câblés de ceinture dans les nappes de ceinture (4a) formant la couche de ceinture croisée (41), et θ₂ est un angle, par rapport au plan équatorial du pneu (E), d'un fil câblé dans la nappe de ceinture (4a) formant la couche de ceinture inclinée (42),
dans une section transversale dans le sens de la largeur du pneu, la carcasse (3) présente une forme, à partir d'une position extérieure de la carcasse (3) dans le sens radial du pneu jusqu'à une position extérieure de la carcasse (3) dans le sens de la largeur du pneu, constituée en reliant deux arcs ayant un centre de courbure vers l'intérieur du pneu (1) et ayant différents rayons de courbure,
R₁ > R₂, R₁ étant le rayon de courbure d'un arc intérieur positionné à l'intérieur dans le sens de la largeur du pneu et R₂ étant le rayon de courbure d'un arc extérieur positionné à l'extérieur dans le sens de la largeur du pneu, et
une distance (Dᵢ), mesurée dans le sens de la largeur du pneu à partir du plan équatorial du pneu (E), jusqu'à une intersection (I) de l'arc intérieur et de l'arc extérieur, est de 80 à 105 % d'une distance (D), mesurée dans le sens de la largeur du pneu à partir du plan équatorial du pneu (E) d'une étendue de recouvrement entre les nappes de ceinture (4a) dans la couche de ceinture croisée (41).

2. Pneu pour charges lourdes selon la revendication 1, dans lequel R₁/ R₂ ≥ 9,5.
